Europäisches Patentamt

European Patent Office

Office européen des brevets

(11) Publication number: **0 003 443**

**A1**

## (12) EUROPEAN PATENT APPLICATION

(21) Application number: **79300148.8**

(22) Date of filing: **30.01.79**

(51) Int. Cl.²: **F 16 C 33/64**
**B 21 D 53/10**

(30) Priority: **01.02.78 GB 393578**

(43) Date of publication of application:
**08.08.79 Bulletin 79/16**

(84) Designated contracting states:
**DE FR GB IT**

(71) Applicant: **THE TORRINGTON COMPANY LIMITED**
**Torrington Avenue**
**Coventry West Midlands, CV4 9AE(GB)**

(72) Inventor: **Batt, Robert Stanley**
**35 Kilsby Road Barby**
**Rugby Warwickshire(GB)**

(72) Inventor: **Adams, Arnold Robert**
**34 Coventry Road**
**Brinklow, Rugby Warwickshire(GB)**

(72) Inventor: **Elson, Michael William**
**20 Bishopton Close**
**Mount Nod Coventry Warwickshire(GB)**

(74) Representative: **Couch, Bernhard Charles et al,**
**W.P. THOMPSON & CO. Coopers Building, Church**
**Street**
**Liverpool L1 3AB(GB)**

(54) **Improvements in or relating to rolling bearings.**

(57) A method of manufacturing rolling bearing outer race members, wherein drawn cups (18) are first produced from circular metal blanks (10) in a conventional manner in a multi-plunger transfer press in which the metal blanks (10) are preliminarily shaped and formed in known manner by cooperation between successively arranged forming tools (14, 22) and dies (12, 24).

In order to produce a bearing cup which has a sharp squared corner at its outer diameter, thus enabling the cup to be satisfactorily used with circlips, the initially drawn bearing cup (18) is successively passed to a number of work stations in the same machine, each station comprising a die (26, 32) and a forming tool in the form of a punch (28, 34), wherein a compressing or impact forging action is used to fill in the curved base corners of the cup and produce the desired sharp squared corner (18a).

—FIG.5.—

Croydon Printing Company Ltd.

*C 388/1*

-1-

## DESCRIPTION

"IMPROVEMENTS IN OR RELATING TO ROLLING BEARINGS".

This invention concerns rolling bearings and relates more particularly to outer race members for such bearings.

Many rolling bearings require an outer race member, one example being the relatively small needle bearings which are often used in universal joints. The required outer race members may be made in a number of different ways and the two most conventional ways previously used for this particular bearing are to cold forge the blank from a slug or to turn the blank from solid steel bar.

In both cases material removal by metal cutting is necessary even of the original cold formed blank - and subsequent to hardening of the races, grinding is necessary on the bore, on the outside diameter and on the inner and outer end faces to achieve the surface finish and dimensional tolerances necessary to permit its function as a rolling element bearing.

A more recent development has been the use of races made by deep drawing of sheet metal blanks which require no metal cutting or grinding before or after hardening, and these show a significant reduction in the cost of manufacture.

These deep drawn races or cups suffer a number of disadvantages, however, due to their method of manufacture. Thus, they have a substantial corner radius on the outside corner of the cup, which requires the cup to be axially located in its eventual housing by dished washers or by staking of the housing material. This is because the not unsubstantial thrust load is taken by the closed end face of the cup against the centre shaft and thus other methods of axially locating the cups, for example, by the use of circlips, are not acceptable.

To permit the use of circlips, a sharp corner is needed on the outside diameter of the cup in order to prevent the moment acting on the circlip from twisting it out of its groove.

It is an object of this invention to provide a bearing race having the advantage of requiring no grinding operations subsequent to hardening but with a sharp corner at the outside diameter of the closed end such that it may successfully be used in conjunction with circlips to axially retain it in its housing.

According to the present invention, in a method of manufacturing rolling bearing outer race members, drawn cups are first produced from metal blanks in conventional manner in a multi-plunger transfer press in which the metal blanks are preliminarily shaped and formed in known manner by co-operation between successively arranged forming tools and dies; whilst a plurality of finishing operations resulting in an accurately dimensioned and finished bearing cup having a sharp corner on the O.D. are carried out in successive steps in the same machine by imparting a compressing or forging action to the forming tools used in those steps.

Accordingly, therefore, a preferred method of the invention comprises the steps of locating a circular sheet metal blank over a first cylindrical die, moving a cylindrical forming tool against said blank and into said die to draw said blank into a cup and subsequently

0003443

passing said cup in turn to each of a plurality of further dies and driving said cup into each said die by means of a punch associated therewith to compress and form the cup wall to a final size, configuration and surface finish, complete with a sharp corner on the outside periphery of the cup.

The sharp corner produced at the outer periphery of the cup has the advantage of enabling the cup to be located in a housing by means such as circlips. The use of circlips has an additional advantage in that worn bearings may be removed and replacement bearings inserted by relatively unskilled personnel with no major machinery or tools. This is not possible with bearings retained in the housing by staking or by dished washers. In this case repair and replacement can only be carried out by the original manufacturer of the universal joint who has the correct machinery and tooling to carry out the operation successfully.

The invention will be described further, by way of example, with reference to the accompanying drawings, in which:-

Figs. 1 and 2 are diagrammatic sectional elevations of successive metal drawing stations of a bearing cup manufacturing machine embodying the invention;

Figs. 3 and 4 are fragmentary sections to an enlarged scale, illustrating the metal shaping steps carried out at the work stations of Figs. 1 and 2 respectively;

Fig. 5 is a sectional elevation similar to that of Figs. 1 and 2 showing further work stations in which the partly shaped cup is subjected to compressive forming operations;

Fig. 6 is a fragmentary section illustrating the effect of the latter operations upon the partly formed bearing cup;

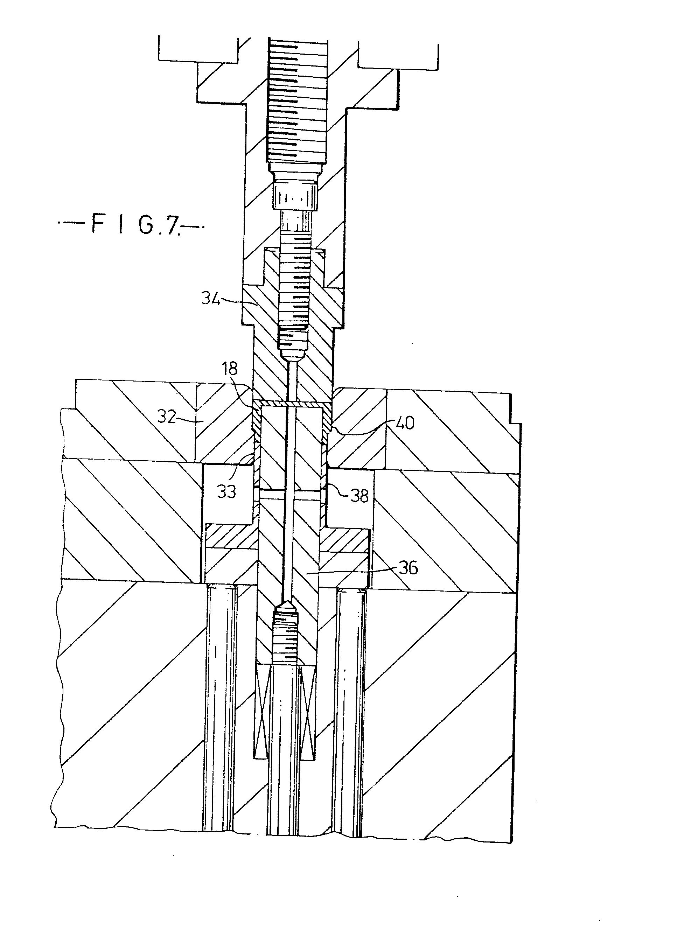

Fig. 7 is a sectional elevation similar to that of Figs. 5 and 6 showing a further work station at which another compressive forming operation is performed; and

Fig. 8 is a sectional elevation of the portion of the cup shaped at the work station of Fig.7.

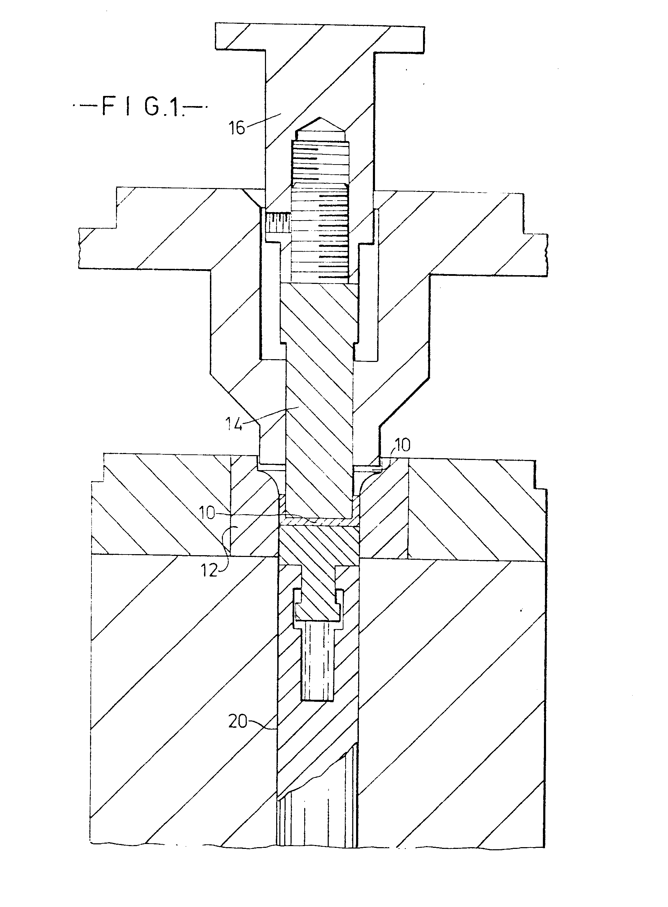

Referring firstly to Figs. 1 - 4 of the drawings, a circular blank 10 is fed in any convenient way to the entrance to a die 12 above which is positioned a cylindrical forming tool 14 carried by a mechanical ram 16. The ram 16 is displaced towards the die 12 and causes the tool 14 to be engaged with the blank 10. Continued movement of the ram 16 then causes the forming tool 14 to force the blank 10 into the die 12, whereby the blank is drawn into an external shape corresponding to that of the die and to an internal shape corresponding to that of the tool 14, resulting in a cup shaped work piece 18.

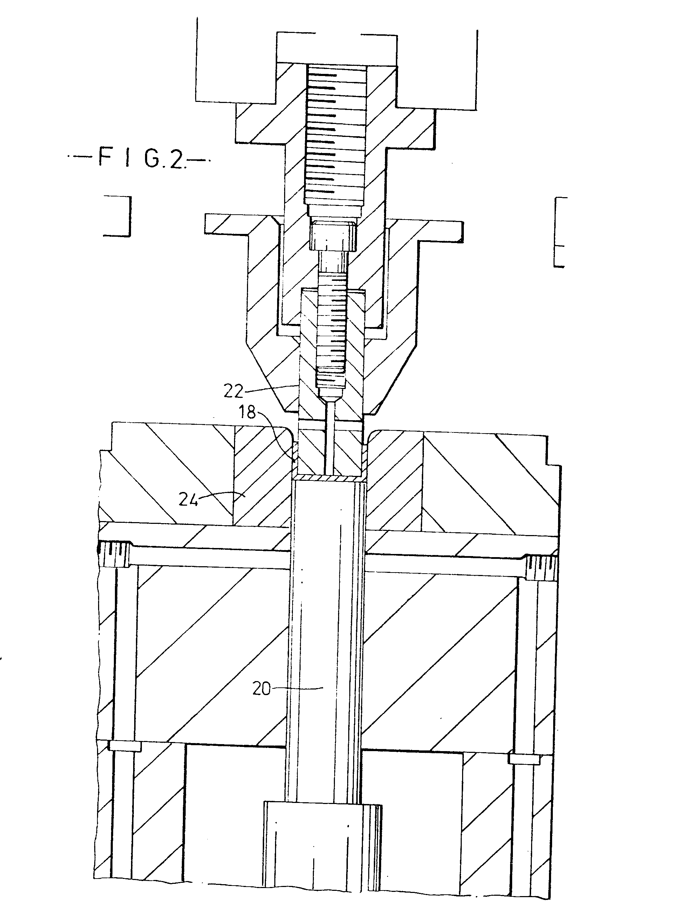

As most clearly seen in Fig.3, the leading peripheral edge region of the die is curved to assist the entry of the blank 10 and the internal diameter of the die brings the drawn blank into a first approximation of the required final diametral dimension. It will be observed that the base of the die is defined by a hydraulic buffer 20 which also acts after the forming tool 14 has been withdrawn from the cup 18, to enable the latter to be hydraulically knocked out of the die 12.

The drawn cup 18 is then passed to the next working station illustrated in Fig.2 and is there forced by a forming tool 22 into a die 24 by which the metal is further drawn and shaped to bring the cup 18 into a configuration more closely approaching that finally required of it, the die for this purpose having a diameter which is slightly reduced relative to that of the die 12 and the forming tool 22 having a similarly reduced radius of curvature between its cylindrical surface and its free axial end.

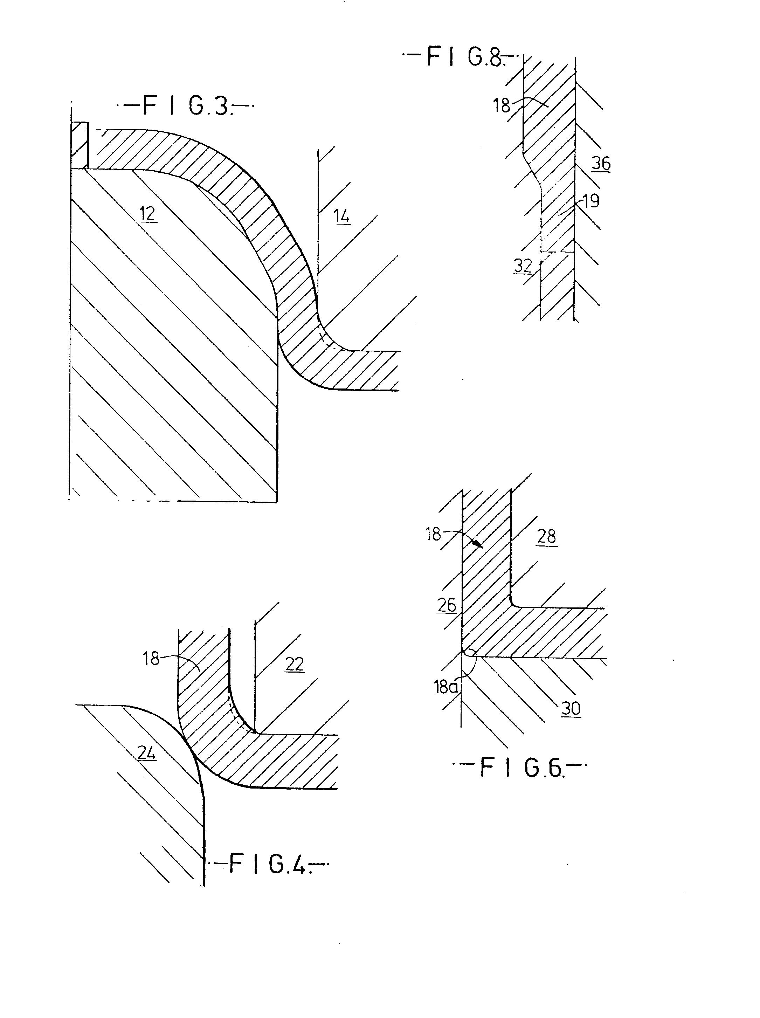

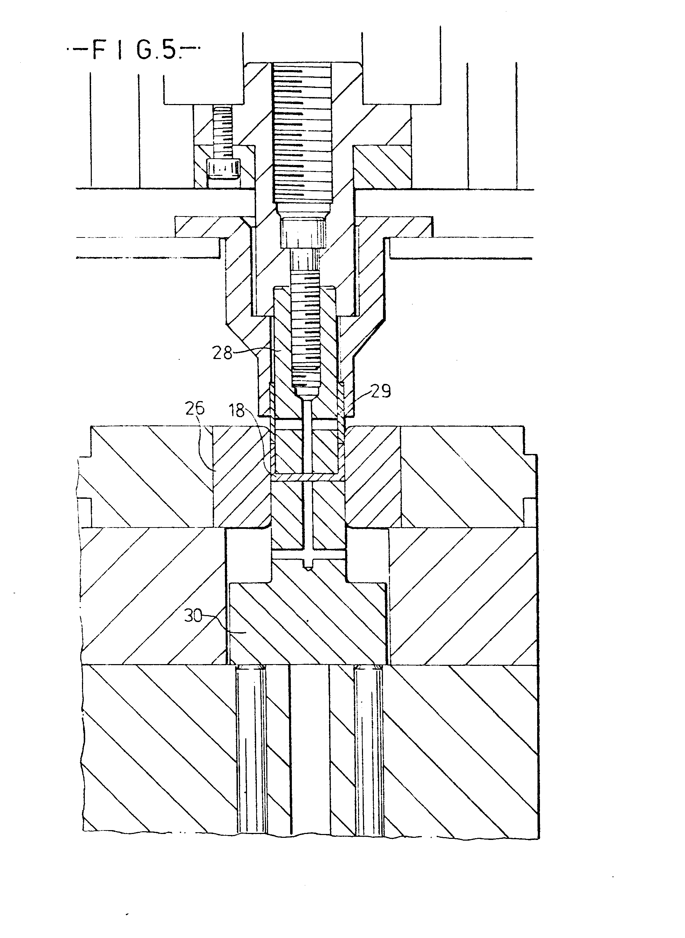

A similar operation is carried out at the work station illustrated in Fig.5 wherein the cup 18 is driven into a die 26 by a sizing punch 28, the punch coacting with a hydraulically cushioned anvil 30 to help shape the cup as shown in Fig.6.

In order to obtain a sharp corner 18a at the outside corner of the closed end of the bearing race, an additional concentric tubular punch 29 surrounding the sizing punch 28, and fitting between the punch 28 and the die 26, is used to compress the already part-formed cup blank resulting in a "filling in" of the part-formed "radiused" corner to become a sharp square corner at the closed end of the cup. At the same time, the open end of the cylindrical body of the cup is "squared off". In the course of this stage the approach of the cup 18 to its final size is so close that both the internal and external cylindrical surfaces are preliminarily planished.

Final planishing is achieved by a further work station (not illustrated). This further work station is identical with that illustrated in Fig.5, except that die and punch dimensions are different from the illustrated work station.

From the further work station, the cup 18 is transferred to the work station shown in Fig.9, in which it is preferably although not necessarily inverted relative to its previous positions and is urged into a die 32 by a punch 34, the cup thus being engaged over a resiliently supported anvil 36. The anvil 36 is in turn engaged within a cylindrical liner 38 hydraulically supported towards the base of the die 32, the liner 38 acting to limit the inward movement of the cup 18 into the die. It will be observed that the die 32 is formed adjacent the normal position of the liner 38 with an annular shoulder 40 leading into a reduced diameter region 33 of the die, the liner 38 being located in the die region 33. The cup is thus formed at its free end with a similarly reduced diameter portion 19, which may be useful for a number of reasons but in this case serves as the desired shape around which a suitable seal is fitted when the bearing race is used as part of a universal joint.

As shown in the drawings the invention thus employs the economical drawing operation shown in Figs. 1 and 3 and thereafter provides successive stations in which the preliminarily shaped cup 18 is successively brought closer and closer to its final shape and dimension by compressive forming operations, some of which additionally act to planish the cup. The transfer of the preliminarily shaped drawn cup to a separate machine for subsequent machining operations designed to effect the sizing and planishing steps and to provide for the end lip in conventional manufacturing processes is thus eliminated, with consequent time saving. The retention of the work piece on the one machine represented in the drawings throughout the great majority of the operations needed to produce the bearing cup similarly speeds up the overall process and because the dimensions of the dies and the punches can be closely controlled, eliminates several sources of manufacturing error which might otherwise occur, for example in independent machining operations.

It will be seen also that the manufacture of the bearing cup is achieved solely by metal forming without the need for material removal.

0003443

- 1 -

<u>CLAIMS</u>

1. A method of manufacturing rolling bearing outer race members, wherein drawn cups (18) are first produced from metal blanks (10) in conventional manner in a multi-plunger transfer press in which the metal blanks (10) are preliminarily shaped and formed in known manner by cooperation between successively arranged forming tools (14, 22) and dies (12, 24), characterised in that whilst a plurality of finishing operations resulting in an accurately dimensioned and finished bearing cup (18) having a sharp corner (18a) on the outside diameter of the cup (18), are carried out in successive steps in the same machine by imparting a compressing or forging action to the forming tools (26, 34) used in those steps.

2. A method as claimed in Claim 1, comprising the steps of locating a circular sheet metal blank (10) over a first cylindrical die (12), moving a cylindrical forming tool (14) against said blank (10) and into said die (12) to draw said blank (10) into a cup (18) and subsequently passing said cup (18) in turn to each of a plurality of further dies (26, 32) and driving said cup (18) into each said further die (26, 32) by means of a punch (28, 34) associated therewith to compress and form the cup wall to a final size, configuration and surface finish, complete with a sharp corner (18a) on the outside periphery of the cup (18).

3. A method as claimed in Claim 2, in which the initially drawn cup is forced by a further forming tool (22) into a further die (24) before being acted upon by said punches, the further die (24) being slightly reduced in diameter relative to said first cylindrical die (12), and the further forming tool (22) having a similarly reduced radius of curvature between its cylindrical peripheral surface and its free axial end.

4.  A method as claimed in Claim 2 or 3, in which, when the cup is acted upon by a sizing punch (28) within a die (26), an additional tubular punch (29) concentrically surrounding the sizing punch (28) and fitting between the sizing punch (28) and the die (26), acts upon the already part-formed cup blank resulting in the production of a sharper squared corner (18a) at the closed end of the cup (18).

5.  A method as claimed in any one of Claims 1 to 4, in which the cup (18) is inverted and located on an anvil (36) in one die (32), the cup (18) being impacted by a punch (34) to force the open end edge of the cup into part of the die (32) wherein the gap between the anvil (36) and the die (32) is of reduced dimensions.

0003443

- F I G.1. -

16

14

10

10

12

20

0003443

—F I G.2.—

22

18

24

20

-F I G.3.-

12

14

-F I G.8.-

18

36

19

32

-F I G.4.-

18

22

24

18

28

26

18a

30

-F I G.6.-

0003443

F I G.5.

—F I G.7.—

34

18

32

40

33

38

36

0003443

## EUROPEAN SEARCH REPORT

**European Patent Office**

Application number

EP 79 30 0148

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| X | <u>FR - A - 1 553 224</u> (SCHAEFFLER)<br>  * Page 2, right-hand column, 2nd and 3rd paragraphs; figure 2 *<br><br>-- | 1,3 | F 16 C 33/64<br>B 21 D 53/10 |
| | <u>US - A - 3 348 511</u> (COWLES)<br>  * Column 3, lines 17-59; figures 1-5 *<br><br>-- | 1-4 | |
| | <u>US - A - 4 070 895</u> (YAMADA)<br>  * Column 3, lines 23-65; figures 5 and 8 *<br><br>-- | 1-4 | TECHNICAL FIELDS SEARCHED (int.Cl.²)<br><br>F 16 C 33/00<br>B 21 D 53/00 |
| A | <u>DE - A - 2 049 184</u> (SCHAEFFLER)<br>  * Pages 2 and 3; the figure *<br><br>-- | | |
| A | <u>US - A - 3 732 836</u> (MOLLOY)<br>  * Columns 2 and 3; figures 1-6 *<br><br>-- | | |
| A | <u>FR - A - 2 260 713</u> (DAELEN & LOOS)<br>  * Page 6, lines 1-20; figure 3 *<br><br>---- | | CATEGORY OF CITED DOCUMENTS<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family, corresponding document |

The present search report has been drawn up for all claims

| Place of search | Date of completion of the search | Examiner |
|---|---|---|
| The Hague | 03-05-1979 | BALDWIN |

EPO Form 1503.1   06.78